# EUROPEAN PATENT APPLICATION

(11) **EP 2 202 211 A1**
(43) Date of publication of application: **30.06.2010**
(21) Application number: 08739529.9
(22) Date of filing: 31.03.2008
(51) Int. Cl.: C04B 35/478, B01D 39/20, B01J 35/04, C04B 38/06

(54) **HONEYCOMB STRUCTURE**

(71) Applicant: Ibiden Co., Ltd., Ogaki-shi, Gifu 503-8604 (JP)
(72) Inventor: OHNO, Kazushige, Ibi-gun Gifu 501-0695 (JP); YAMAYOSE, Kazunori, Ibi-gun Gifu 501-0695 (JP)
(74) Representative: Uchida, Kenji
(86) International application number: PCT/JP2008/056416
(87) International publication number: WO 2009/122539

(57) **Abstract**

An object of the present invention is to provide a honeycomb structured body whose regeneration frequency is low. The honeycomb structured body of the present invention is a pillar-shaped honeycomb structured body including aluminum titanate containing ratios of 40 to 60% by mass of Al₂O₃, 30 to 50% by mass of TiO₂, and 1 to 15% by mass of (MgO + SiO₂), and includes a large number of cells provided in parallel with one another in a longitudinal direction, and each of the cells is sealed at either one end. The honeycomb structured body has a porosity of 40% to 60% and an aperture ratio of 55% to 75%.

## Description

### TECHNICAL FIELD

The present invention relates to a honeycomb structured body.

### BACKGROUND ART

Exhaust gas discharged from internal combustion engines such as a diesel engine contains particulate matter (hereinafter, also referred to as PM). In recent years, PM has raised serious problems because it is harmful to the environment and human body.
To overcome this problem, various filters in which a honeycomb structured body made of cordierite, silicon carbide, aluminum titanate or the like is used have been developed as filters designed to capture PM in exhaust gas and purify it.

Honeycomb structured bodies made of aluminum titanate are thought to be highly heat resistant because, compared to honeycomb structured bodies made of cordierite, the honeycomb structured bodies made of aluminum titanate have a higher melting temperature, and thereby are less likely to melt upon burning of PM in a regenerating process. In addition, compared to honeycomb structured bodies made of silicon carbide, the honeycomb structured bodies made of aluminum titanate have a lower thermal expansion coefficient. Therefore, even if a honeycomb structured body made of aluminum titanate is large in size, cracks caused due to thermal stress generated by burning PM are less likely to occur in the honeycomb structured body. For these reasons, the honeycomb structured bodies made of aluminum titanate are thought to be highly resistant to thermal shock. If a regenerating process is performed on a honeycomb structured body containing a large amount of PM captured therein, a large quantity of heat (large thermal stress) is generated. Even in such a case, owing to these properties, the honeycomb structured bodies made of aluminum titanate are less likely to melt and crack. Namely, the honeycomb structured bodies made of aluminum titanate are capable of withstanding a regenerating process performed after a larger amount of PM has been captured. Therefore, it is possible to decrease the frequency of a regenerating process (hereinafter, referred to as a regeneration frequency).
Such a honeycomb structured body made of aluminum titanate (hereinafter, also referred to as a honeycomb structured body) is disclosed, for example, in Patent Document 1.

Patent Document 1 discloses a honeycomb structured body that is manufactured by mixing alkali feldspar and MgO with a wet mixture containing TiO₂ and Al₂O₃ and firing the resulting mixture through a reaction sintering process involving the reaction between TiO₂ and Al₂O₃.

Patent Document 1: JP-A 2005-87797

### DISCLOSURE OF THE INVENTION

### PROBLEMS TO BE SOLVED BY THE INVENTION

Patent Document 1 describes that the honeycomb structured body disclosed therein is highly resistant to thermal decomposition and have higher fracture strength owing to components of alkali feldspar and Mg derived from MgO.

The honeycomb structured body described in Patent Document 1, however, has a porosity as low as 20 to 50%, and thereby does not offers a sufficiently large capacity for capturing PM when used to purify exhaust gas. Hereinafter, this "capacity" is also referred to as a capture capacity.

Typically, the pressure loss in a honeycomb structured body used to purify exhaust gas gradually increases with an increase in the amount of PM captured in the honeycomb structured body, and rapidly increases when the amount of PM captured in the honeycomb structured body reaches a certain level near the limit of the capture capacity. Therefore, it is necessary to perform a regenerating process to burn PM captured in the honeycomb structured body when the pressure loss reaches a predetermined level before the amount of captured PM reaches a certain level near the limit of the capture capacity.

As described above, the honeycomb structured body described in Patent Document 1 has a porosity as low as 20 to 50%, and thereby does not have a sufficiently large capture capacity. Even a small amount of PM captured in this honeycomb structured body may reach a certain level near the limit of the capture capacity. In order to avoid a rapid increase in the pressure loss, a regenerating process should be frequently performed.
If the aperture ratio of the honeycomb structured body is not sufficiently high, exhaust gas may not smoothly pass through cells of the honeycomb structured body, and the pressure loss reaches a predetermined level soon. This leads to a problem that such a honeycomb structured body requires a regenerating process more frequently.
In other words, such a honeycomb structured body has the problem of high regeneration frequency. A higher frequency of a regenerating process leads to another problem of reducing the fuel consumption rate of an internal combustion engine.
From this fact, there is a demand for a honeycomb structured body whose regeneration frequency is low.

An object of the present invention is to provide a honeycomb structured body whose regeneration frequency is low.

### MEANS FOR SOLVING THE PROBLEMS

In order to solve the above-mentioned problems, a honeycomb structured body according to claim 1 is a pillar-shaped honeycomb structured body including aluminum titanate containing ratios of 40 to 60% by mass of Al₂O₃, 30 to 50% by mass of TiO₂, and 1 to 15% by mass of (MgO + SiO₂). The honeycomb structured body includes a large number of cells provided in parallel with one another in a longitudinal direction, and each of the cells is sealed at either one end.
The honeycomb structured body has a porosity of 40% to 60% and an aperture ratio of 55% to 75%.

The honeycomb structured body according to claim 1 has a porosity of 40% or more and an aperture ratio of 55% or more. This structure ensures a sufficiently large capture capacity while maintaining the pressure loss at a low level. With this structure, it is possible to avoid the problem that even a small amount of PM captured in the honeycomb structured body reaches a certain level near the limit of the capture capacity.
Therefore, the honeycomb structured body does not frequently require a regenerating process; that is, the regeneration frequency of the honeycomb structured body is low.
As used herein, an "aperture ratio" refers to a ratio of the area of the cells in the total area of the end face of a honeycomb structured body.

The honeycomb structured body according to claim 1 has a porosity of 60% or less and an aperture ratio of 75% or less. In this structure, the cell walls of the honeycomb structured body are constituted by a base material with a high density, and the ratio of the area of the cells to the area of the cell walls is not too high. Therefore, this structure ensures strength of the honeycomb structured body at a sufficient level. For this reason, the honeycomb structured body is less likely to melt and crack even when a large thermal stress is generated in a regenerating process performed after a large amount of PM has been captured. Accordingly, the honeycomb structured body is capable of withstanding a regenerating process performed after a larger amount of PM has been captured, and thereby the regeneration frequency of the honeycomb structured body is low.
Owing to its low regeneration frequency, the honeycomb structured body improves the fuel consumption rate of an internal combustion engine.

On the other hand, a honeycomb structured body having a porosity of less than 40% has a small capture capacity. In a honeycomb structured body having an aperture ratio of less than 55%, the pressure loss is high, which leads to a high regeneration frequency.
However, a honeycomb structured body having a porosity of more than 60% has a low strength because the cell walls of the honeycomb structured body are constituted by a base material with a low density. A honeycomb structured body having an aperture ratio of more than 75% also has low strength because the ratio of the area of the cells to the area of the cell walls is too high. Such a honeycomb structured body may melt and crack when a larger thermal stress is generated in the honeycomb structured body in a regenerating process performed after a larger amount of PM has been captured. Therefore, the honeycomb structured body requires a regenerating process after it has captured a small amount of PM; that is, the regeneration frequency of the honeycomb structured body is high.

The honeycomb structured body according to claim 2 is manufactured by molding a wet mixture including an aluminum titanate powdery material containing ratios of 40 to 60% by mass of Al₂O₃, 30 to 50% by mass of TiO₂, and 1 to 15% by mass of (MgO + SiO₂) to form a pillar-shaped honeycomb molded body having a large number of cells provided in parallel with one another in a longitudinal direction, and firing the honeycomb molded body at a temperature of 1200°C to 1700°C. The honeycomb structured body has a porosity of 40% to 60% and an aperture ratio of 55% to 75%.

The honeycomb structured body according to claim 2 is manufactured by forming a honeycomb molded body using a pre-prepared wet mixture including an aluminum titanate powdery material having a specific composition and then firing the honeycomb molded body. Namely, the honeycomb structured body according to claim 2 may be manufactured through a step in which the particle diameter of an aluminum titanate powdery material is adjusted, and then a wet mixture is prepared by using the aluminum titanate powdery material. In addition, the honeycomb structured body is manufactured through the firing step that does not involve the reaction between TiO₂ and Al₂O₃.
Accordingly, the honeycomb structured body shows small variations in pore diameter distribution.

The honeycomb structured body according to claim 2 is manufactured through the step of firing a honeycomb molded body at a temperature of 1200°C to 1700°C.
The degree of shrinkage of the honeycomb structured body according to claim 2 caused during the firing step is small although aluminum titanate particles are surely combined with each other. In addition, aluminum titanate is not decomposed. Therefore, the honeycomb structured body shows small variations in pore diameter distribution.
On the other hand, at a firing temperature of less than 1200°C, aluminum titanate may not be sufficiently sintered, which may lead to variations in pore diameter distribution.
At a firing temperature of more than 1700°C, the degree of shrinkage of a honeycomb structured body caused during the firing step may be greater, which may result in non-uniformity in pore diameter. In such a honeycomb structured body, aluminum titanate may be decomposed.
Accordingly, the honeycomb structured body according to claim 2 shows small variations in pore diameter distribution, and thereby has higher fracture strength. The PM capturing efficiency of the honeycomb structured body is high.

### BEST MODE FOR CARRYING OUT THE INVENTION

### (First Embodiment)

Hereinafter, a first embodiment, one embodiment of the present invention, is described with reference to the figures.

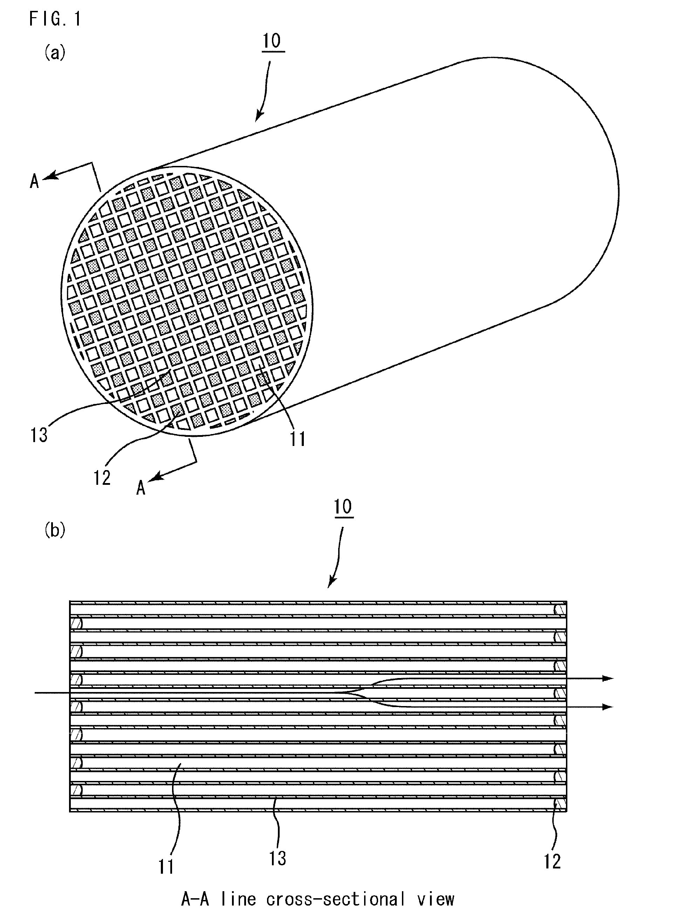

Fig. 1 (a) is a perspective view schematically illustrating a honeycomb structured body of the present invention, and Fig. 1 (b) is an A-A line cross-sectional view of Fig. 1 (a).

A honeycomb structured body 10 shown in Fig. 1 (a) includes aluminum titanate and has a cylindrical shape. As shown in Fig. 1 (b), a large number of cells 11 are formed in the inside of the honeycomb structured body 10 along the longitudinal direction. Each cell 11 is separated by a cell wall 13.
Either one end of each cell 11 is sealed with a plug 12.

The plugs 12 are formed with the same material as that of the honeycomb structured body 10, and the material includes aluminum titanate. The honeycomb structured body 10 is sealed with the plugs 12 to prevent exhaust gas from leaking out of predetermined ends of the cells 11. In this structure, exhaust gas that flows into one cell (indicated by the arrow in Fig. 1(b)) positively passes through the cell wall 13 defining the cell and flows out of another cell. When exhaust gas passes through the cell wall 13, PM therein is captured in the cell wall 13 so that the exhaust gas is purified.

The honeycomb structured body 10 of the present embodiment has a porosity of 40% to 60%. The porosity of the honeycomb structured body may be measured, for example, in the measurement procedure below.
First, a honeycomb structured body is cut to provide a 1 cm cube sample. The obtained sample is measured for pore diameter and fine-pore distribution (pore diameter distribution) in a fine-pore diameter range of 0.2 to 500 µm by a mercury injection method with a fine-pore distribution measuring apparatus, and then the porosity of the sample is calculated.
Here, the porosity can be determined through a known method such as a mercury injection method, a weighing method, or Archimedes method.

The honeycomb structured body 10 has an aperture ratio of 55 to 75%.
The aperture ratio may be determined, for example, by calculating the area of cells formed in a unit area based on the cell wall thickness and the cell density, and calculating the ratio of the area of cells in the unit area.

As described above, the honeycomb structured body 10 includes aluminum titanate. Aluminum titanate contains ratios of 40 to 60% by mass of Al₂O₃, 30 to 50% by mass of TiO₂, and 1 to 15% by mass of (MgO + SiO₂).
The composition of the aluminum titanate powdery material is determined by ICP emission spectrochemical analysis.
In the ICP emission spectrochemical analysis, plasma energy is externally applied to an analysis sample to excite elements (atoms) in the sample, and emission lines (spectral lines) emitted when the excited atoms return to low energy levels are measured with respect to each wavelength of photons. Then, the component elements are identified based on the positions of the emission lines and quantified based on the intensity of the emission lines.

In the present embodiment, the ratios of the components of aluminum titanate are determined to be in the above-mentioned ranges based on the following reasons.
If the ratios of the components of aluminum titanate are out of the above-mentioned ranges, as a manufactured honeycomb structured body is repeatedly exposed to, for example, heat of exhaust gas in use as an exhaust gas purifying apparatus, aluminum titanate is gradually decomposed into Al₂O₃ and TiO₂.
As a result, the honeycomb structured body will lose the characteristics and properties derived from aluminum titanate, which in turn leads to, for example, a reduction in the strength or the like.

If the ratio of (MgO + SiO₂) is less than 1.0% by mass, as a manufactured honeycomb structured body is repeatedly exposed to, for example, heat of exhaust gas in use as an exhaust gas purifying apparatus, aluminum titanate is gradually decomposed into Al₂O₃ and TiO₂.
If the ratio of (MgO + SiO₂) is more than 15% by mass, while a manufactured honeycomb structured body is repeatedly exposed to, for example, heat of exhaust gas in use as an exhaust gas purifying apparatus, cracks may occur due to thermal expansion.
The preferable lower limit of the ratio of (MgO + SiO₂) is 2.5% by mass. A ratio of 2.5% by mass or more of (MgO + SiO₂) contributes more to prevention of decomposition of aluminum titanate.

The honeycomb structured body 10 of the present embodiment is manufactured by the method described below.
(1) A wet mixture is prepared by mixing an aluminum titanate powdery material, a pore-forming agent, an organic binder, a plasticizer, a lubricant, and water, and sufficiently stirring the mixture.
   The aluminum titanate powdery material may be an aluminum titanate powdery material having a particle diameter adjusted to a predetermined size in advance. For example, a coarse powdery material of aluminum titanate having an average particle diameter of 3 to 50 µm, and a fine powdery material of aluminum titanate having an average particle diameter of 0.1 to 3 µm may be used in combination.
   The use of two kinds of aluminum titanate powdery materials each having a different particle diameter (a coarse powdery material of aluminum titanate and a fine powdery material of aluminum titanate) facilitates control of the pore diameter of the honeycomb structured body.
   If the average particle diameter of the coarse powdery material of aluminum titanate is 3 µm, the average particle diameter of the fine powdery material of aluminum titanate may be 0.1 µm or more and less than 3 µm.

(2) The wet mixture is extrusion-molded by an extrusion-molding machine to provide a round pillar-shaped elongated honeycomb molded body having a large number of cells provided in parallel with one another in the longitudinal direction. Subsequently, the elongated honeycomb molded body is cut into a predetermined length by a cutting apparatus provided with a cutting disk as a cutting member to provide a honeycomb molding body of the predetermined length.

(3) The honeycomb molded body is dried using a microwave drying apparatus and a hot-air drying apparatus in air atmosphere at a temperature of 100°C to 150°C for 1 to 30 minutes.

(4) A predetermined end of each cell of the honeycomb molded body is filled with a plug material paste to seal either one end of each cell. The honeycomb molded body having cells with either one end filled with the plug material paste is dried again.
   The plug material paste is a paste having the same composition as that of the wet mixture.

(5) The honeycomb molded body is degreased in a degreasing furnace in an atmosphere with an oxygen concentration from 5% by volume to that in air atmosphere at a temperature of 250°C to 400°C for 1 to 15 hours.
   Subsequently, the honeycomb molded body is fired in a firing furnace at a temperature of 1200°C to 1700°C for 1 to 24 hours.
   In a honeycomb structured body manufactured through firing at a firing temperature in the above-mentioned range, although particles are surely combined with each other, the degree of shrinkage caused during the firing step is small. As a result, aluminum titanate is not decomposed. Therefore, the honeycomb structured body shows small variations in pore diameter distribution.
   On the contrary, at a firing temperature of less than 1200°C, aluminum titanate may not be sufficiently sintered. As a result, a manufactured honeycomb structured body may show variations in pore diameter distribution.
   At a firing temperature of more than 1700°C, the degree of shrinkage of a honeycomb structured body caused during the firing step may be greater, which may result in non-uniformity in pore diameter. In such a honeycomb structured body, aluminum titanate may be decomposed.
   Through such steps, the honeycomb structured body 10 is manufactured.

The effects of the honeycomb structured body of the first embodiment are listed below.
(1) The honeycomb structured body of the present embodiment has a porosity of 40% or more and an aperture ratio of 55% or more. This structure ensures a sufficiently large capture capacity while maintaining the pressure loss at a low level. With this structure, it is possible to avoid the problem that that even a small amount of PM captured in the honeycomb structured body reaches a certain level near the limit of the capture capacity.
   Therefore, the honeycomb structured body does not frequently require a regenerating process; that is, the regeneration frequency of the honeycomb structured body is low.
   The honeycomb structured body of the present embodiment has a porosity of 60% or less and an aperture ratio of 75% or less. This structure ensures strength of the honeycomb structured body at a sufficient level. Therefore, the honeycomb structured body is less likely to melt and crack even when a large thermal stress is generated by a regenerating process performed after a larger amount of PM has been captured.
   Accordingly, the regeneration frequency of the honeycomb structured body is low.
   Owing to its low regeneration frequency, the honeycomb structured body improves the fuel consumption rate of an internal combustion engine.

(2) The honeycomb structured body of the present embodiment includes an aluminum titanate powdery material containing ratios of 40 to 60% by mass of Al₂O₃, 30 to 50% by mass of TiO₂, and 1 to 15% by mass of (MgO + SiO₂). Owing to this composition, aluminum titanate is not decomposed and cracks caused due to thermal expansion do not occur in the honeycomb structured body of the present embodiment.

(3) The honeycomb structured body of the present embodiment is manufactured by molding a pre-prepared wet mixture including an aluminum titanate powdery material having a specific composition to form a honeycomb molded body, and firing the honeycomb molded body. In other words, the honeycomb structured body according to claim 2 may be manufactured through a step in which the particle diameter of an aluminum titanate powdery material is adjusted, and then a wet mixture is prepared by using the aluminum titanate powdery material. The honeycomb structured body is manufactured through the firing step that does not involve the reaction between TiO₂ and Al₂O₃.
   Accordingly, the honeycomb structured body shows small variations in pore diameter distribution, and thereby has higher fracture strength. The PM capturing efficiency of the honeycomb structured body is high.

(4) The honeycomb structured body of the present embodiment is manufactured through the step of firing a honeycomb molding body at 1200°C to 1700°C.
   The degree of shrinkage of the honeycomb structured body of the present embodiment through the firing step is small although aluminum titanate particles are surely combined with each other. In addition, aluminum titanate is not decomposed. Therefore, the honeycomb structured body shows small variations in pore diameter distribution.

(5) In the honeycomb structured body of the present embodiment, either one end of each cell is sealed. With this structure, the honeycomb structured body may be used as a filter for purifying exhaust gas.

### (Examples)

Hereinafter, examples are provided to specifically illustrate the first embodiment of the present invention. However, the present embodiment is not limited to these examples.
First, an aluminum titanate powdery material containing ratios of 56% by mass of Al₂O₃, 38% by mass of TiO₂, 2% by mass of MgO and 3% by mass of SiO₂ was prepared.

The sum of the ratios of the components of the aluminum titanate powdery material is 99% by mass, and does not reach 100% by mass. The rest (1% by mass) is for contaminants contained in the aluminum titanate powdery material.
Examples of the contaminants include substances derived from alkali feldspar (K₂O, Na₂O, etc.), iron compounds that contaminated the powdery materials while the aluminum titanate powdery materials were ground or mixed, substances originally contained in Al₂O₃ powder or TiO₂ powder, which are the raw materials of the aluminum titanate powdery materials, and the like.

Then, a grinding process and a classification process were carried out on the aluminum titanate powdery material to prepare a coarse powdery material of aluminum titanate having an average particle diameter of 20 µm, and a fine powdery material of aluminum titanate having an average particle diameter of 0.5 µm.

### (Example 1)

(1) An amount of 2000 parts by weight of the coarse powdery material of aluminum titanate, 430 parts by weight of the fine powdery material of aluminum titanate, 360 parts by weight of a pore-forming agent (spherical acrylic particles), 188 parts by weight of an organic binder (methyl cellulose), 96 parts by weight of a plasticizer (UNILUB, manufactured by NOF Corporation), 44 parts by weight of a lubricant (glycerin), and 725 parts by weight of water were mixed and sufficiently stirred to prepare a wet mixture.

(2) The wet mixture was charged into a cylinder from a wet mixture tank of a plunger-type extrusion-molding machine, and a piston was pressed toward the die side so that the wet mixture was extruded through a round pillar-shaped die. Thus, a round pillar-shaped elongated honeycomb molded body including aluminum titanate was manufactured. In the elongated honeycomb molded body, a large number of cells were provided in parallel with one another in the longitudinal direction with a cell wall interposed therebetween.

(3) The elongated honeycomb molded body was cut into a predetermined length by a cutting apparatus provided with a cutting disk as a cutting member. Thus, a round-pillar shaped honeycomb molded body including aluminum titanate was obtained.

(4) The honeycomb molded body was dried by a microwave drying apparatus and a hot-air drying apparatus in air atmosphere at 120°C for 20 minutes to remove moisture contained in the honeycomb molded body.

(5) After the drying process, predetermined cells of the honeycomb molded body were filled with a plug material paste having the same composition as that of the wet mixture prepared in the step (1) so that either one end of each cell of the honeycomb molded body was sealed.

(6) The honeycomb molding body filled with the plug material paste was dried again in air atmosphere at 120°C for 10 minutes. Subsequently, the honeycomb molded body was degreased in a degreasing furnace at 300°C for 12 hours in an atmosphere with an oxygen concentration of 6% by volume.

(7) The degreased honeycomb molded body was fired in a firing furnace at 1500°C for 15 hours.
   Through the steps (1) to (7), a honeycomb structured body including aluminum titanate was manufactured. The honeycomb structured body had a cell wall thickness of 0.2 mm, a cell density of 300 pcs/in² (46.5 pcs/cm²), a diameter of 143.8 mm, and a longitudinal length of 150 mm.

The porosity of the honeycomb structured body determined by the above-described mercury injection method was 40%. The area of cells formed in a unit area (1 inch²) was calculated based on the cell wall thickness (0.2 mm) and the cell density (300 pcs/in²). The aperture ratio of the honeycomb structured body, which was calculated as the ratio of the area of cells in the unit area (1 inch²), was 74.6%.

The interval of the regenerating process was measured on the honeycomb structured body manufactured in the present example, and the regeneration frequency was evaluated.

### (Evaluation of Regeneration Frequency)

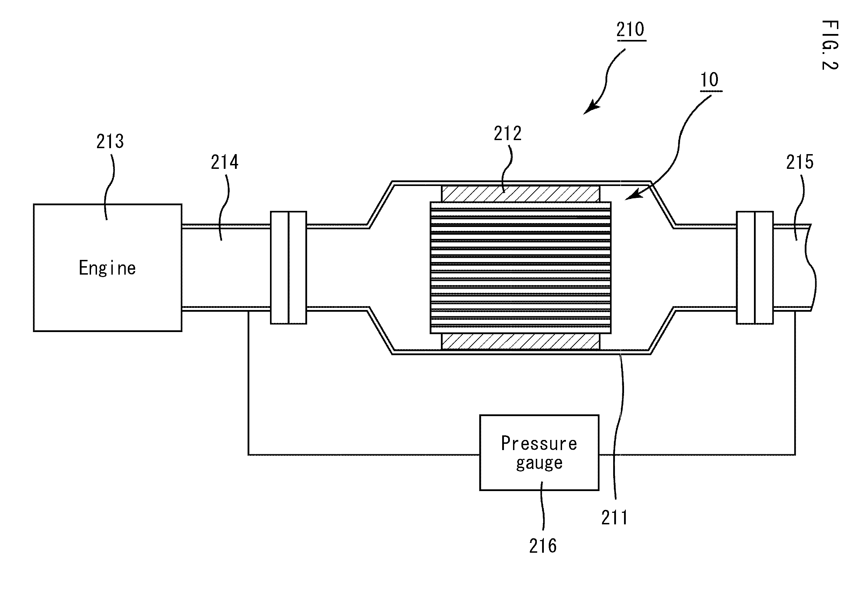

A regenerating process interval measuring apparatus 210 shown in Fig. 2 was used for the measurement. Fig. 2 is an explanatory view of the regenerating process interval measuring apparatus.
The regenerating process interval measuring apparatus 210 is constituted by a honeycomb structured body 10, a casing 211 surrounding the honeycomb structured body 10, and a holding sealing material 212 disposed between the honeycomb structured body 10 and the casing 211. An introduction pipe 214 connected to an engine 213 is connected to the end at the exhaust gas introduction side of the casing 211, and an exhaust pipe 215 connected to the outside is connected to the other end of the casing 211. A pressure gauge 216 is attached to detect the differential pressure (pressure loss) between the front and the back of the honeycomb structured body 10.

PM was captured for a predetermined time while the engine was driven at the number of revolutions of 3000 min⁻¹ with a torque of 50 Nm. When the pressure loss reached 20kPa, that is, immediately before the amount of captured PM would reach near the limit of the capture capacity, the number of revolutions of the engine was controlled to 4000 min⁻¹ to keep the filter temperature constant at about 700°C. Thereafter, the engine was driven at the number of revolutions of 1050 min⁻¹ with a torque of 30 Nm to forcefully burn PM captured in the honeycomb structured body.
The interval time of the regenerating process, which refers to a regenerating process interval, was measured. The obtained regenerating process interval was 780 minutes. Regenerating process interval coefficients were calculated from the regenerating process interval of Example 1 and the regenerating process intervals of Examples 2 to 9 and Comparative Examples 1 to 6 described below. The regeneration frequency of each of Examples and Comparative Examples was evaluated by comparing the regenerating process interval coefficients. The regenerating process interval coefficient was calculated in a manner described later.

### (Examples 2 to 9, Comparative Examples 1 to 6)

In each example, a honeycomb structured body was manufactured in the same manner as in Example 1, except that the blending amounts of the raw materials of the wet mixture and the firing conditions were changed as shown in Table 1 so that the honeycomb structured body had the porosity shown in Table 2, and that the cell wall thickness and the cell density of the honeycomb structured body were changed as shown in Table 2 so that the honeycomb structured body had the aperture ratio shown in Table 2.

The regenerating process interval was measured on the manufactured honeycomb structured bodies in the same manner as in Example 1. The regenerating process interval of Example 1 was normalized as 1, and the ratios of the regenerating process intervals of Examples and Comparative Examples to that of Example 1, which are the regenerating process interval coefficients, were calculated. A regenerating process interval coefficient of, for example, less than 1 indicates that the regenerating process interval is shorter than that of the honeycomb structured body of Example 1, and that the regeneration frequency is high. On the contrary, a regenerating process interval coefficient larger than 1 indicates that the regenerating process interval is longer than that of the honeycomb structured body of Example 1, and that the regeneration frequency is low.
In some honeycomb structured bodies of Comparative Examples, cracks were observed after the measurement of the regenerating process interval under the same conditions as those of Example 1. For this reason, a condition was changed, that is, the reference pressure loss for the regenerating process was lowered from 20 kPa to a level at which cracks may not occur in the honeycomb structured bodies, and the regenerating process was performed when the pressure loss reached this lowered level. The regenerating process interval coefficients of Comparative Examples 1 to 6 were calculated based on the regenerating process intervals measured under the changed condition.
Table 1 shows the conditions for manufacturing honeycomb structured bodies having a different porosity of Examples 1 to 9 and Comparative Examples 1 to 6. Table 2 shows values of the characteristics and the regenerating process interval coefficients of the honeycomb structured bodies of Examples 1 to 9 and Comparative Examples 1 to 6.

**[Table 1]**

| | | Porosity 40% | Porosity 50% | Porosity 60% |
|---|---|---|---|---|
| Coarse powdery material (g) | | 2000 | 1720 | 1300 |
| Fine powdery material (g) | | 500 | 430 | 325 |
| Organic binder (g) | | 188 | 188 | 188 |
| Pore-forming agent (g) | | 300 | 360 | 450 |
| Plasticizer (g) | | 96 | 96 | 96 |
| Lubricant (g) | | 44 | 44 | 44 |
| Water (g) | | 725 | 725 | 725 |
| Firing condition | Firing time | 15 | 5 | 1 |
| | Firing temperature (°C) | 1500 | 1500 | 1500 |

**[Table 2]**

| | Porosity (%) | Cell wall thickness (mm) | Cell density (pcs/in²) | Aperture ratio* (%) | Regenerating process interval coefficient** |
|---|---|---|---|---|---|
| Example 1 | 40 | 0.2 | 300 | 74.6 | 1.00 |
| Example 2 | 40 | 0.3 | 300 | 63.3 | 1.10 |
| Example 3 | 40 | 0.4 | 250 | 56.4 | 0.90 |
| Example 4 | 50 | 0.2 | 300 | 74.6 | 1.05 |
| Example 5 | 50 | 0.3 | 300 | 63.3 | 1.15 |
| Example 6 | 50 | 0.4 | 250 | 56.4 | 0.90 |
| Example 7 | 60 | 0.2 | 300 | 74.6 | 0.95 |
| Example 8 | 60 | 0.3 | 300 | 63.3 | 1.10 |
| Example 9 | 60 | 0.4 | 250 | 56.4 | 0.95 |
| Comparative Example 1 | 35 | 0.3 | 300 | 63.3 | 0.70 |
| Comparative Example 2 | 65 | 0.3 | 300 | 63.3 | 0.75 |
| Comparative Example 3 | 40 | 0.35 | 400 | 52.5 | 0.75 |
| Comparative Example 4 | 50 | 0.35 | 400 | 52.5 | 0.80 |
| Comparative Example 5 | 50 | 0.2 | 200 | 79.0 | 0.80 |
| Comparative Example 6 | 60 | 0.2 | 200 | 79.0 | 0.70 |

| | | | | | |
|---|---|---|---|---|---|
| * The aperture ratio is a ratio of the area of cells in the total area of the end face of a honeycomb structured body and calculated based on the cell wall thickness and the cell density. ** The regenerating process interval coefficients are ratios of the regenerating process intervals of Examples and Comparative Examples to the regenerating process interval of Example 1 normalized as 1. | | | | | |

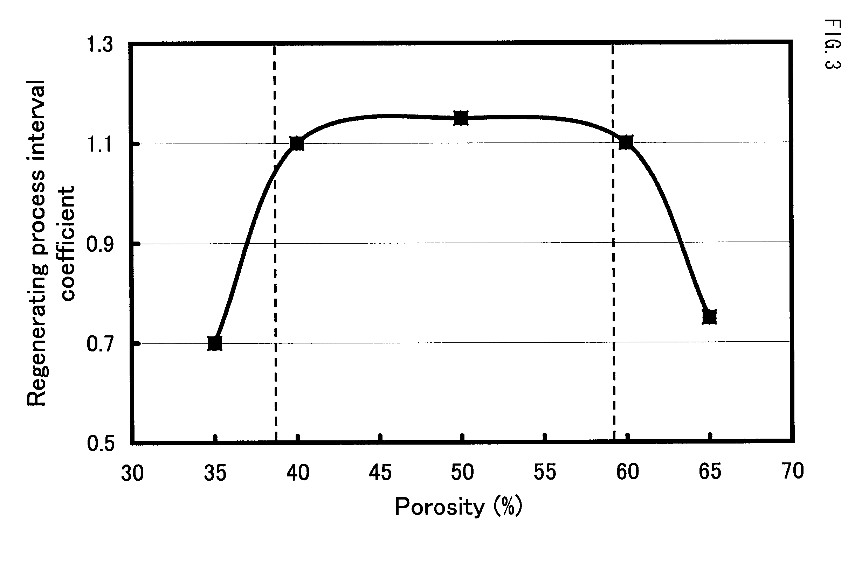

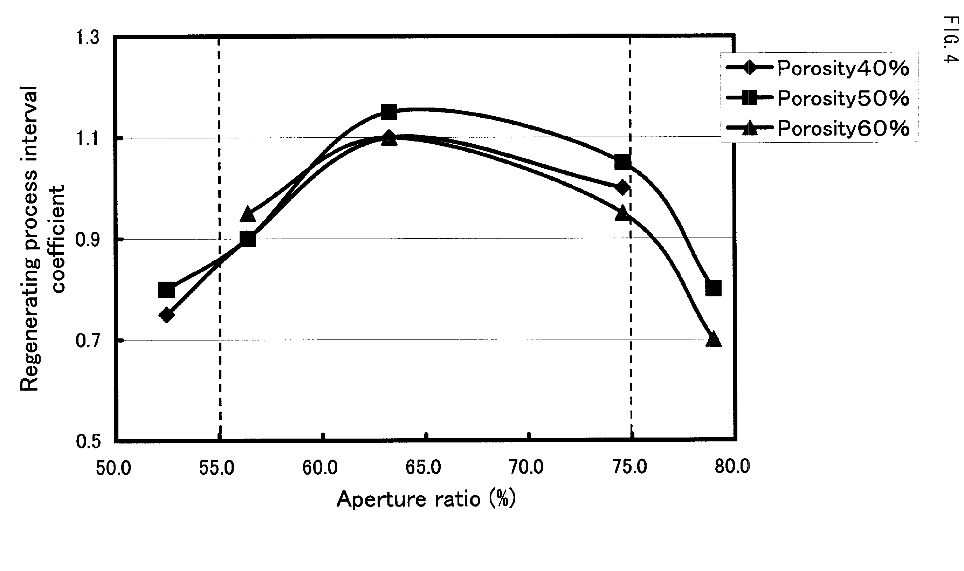

Fig. 3 is a graph with the horizontal axis representing the porosity and the vertical axis representing the regenerating process interval coefficient on which the results of the honeycomb structured bodies of Example 2, 5 and 8, and Comparative Examples 1 and 2, which had the same porosity of 63.3%, are plotted. Fig. 4 is a graph with the horizontal axis representing the aperture ratio and the vertical axis representing the regenerating process interval coefficient on which the results of the honeycomb structured bodies of Examples 1 to 9 and Comparative Examples 3 to 6 are plotted.

As shown in these results, the regenerating process interval of the honeycomb structured bodies of Examples 1 to 9 was longer than that of the honeycomb structured bodies of Comparative Examples 1 to 6, indicating that the regeneration frequency of these honeycomb structured bodies was low.
The honeycomb structured body of Comparative Example 1 had a porosity of less than 40%, and thereby had a small capture capacity. Due to this structure, the amount of PM captured in the honeycomb structured body immediately reached the level near the limit of the capture capacity, and thereby the honeycomb structured body frequently required the regenerating process to avoid a rapid increase in the pressure loss. The pressure loss of the honeycomb structured bodies of Comparative Examples 3 and 4 having a porosity of less than 55% was high, and thereby these honeycomb structured bodies frequently required the regenerating process. Therefore, their regenerating process interval was shorter than that of the honeycomb structured bodies of Examples 1 to 9.
The honeycomb structured body of Comparative Example 2 having a porosity of more than 60% and the honeycomb structured bodies of Comparative Examples 5 and 6 having an aperture ratio of more than 75% had low strength. In order to avoid damage such as cracks caused due to thermal stress to the honeycomb structured bodies, these honeycomb structured bodies frequently required the regenerating process. Accordingly, their regenerating process interval was shorter than those of the honeycomb structured bodies of Examples 1 to 9.
The regeneration frequency of the honeycomb structured bodies of Comparative Examples 1 to 6 was higher than the regeneration frequency of the honeycomb structured bodies of Examples 1 to 9.

### (Other Embodiments)

The cross-sectional shape of a honeycomb structured body of the present invention, which is perpendicular to the longitudinal direction, is not particularly limited to a round shape, and various shapes such as a rectangular shape may be used; however, it is preferable to use a shape enclosed only by a curved line or by curved lines and straight lines.
In addition to a round shape, specific examples thereof include a cylindroid shape, an elongated round shape, a racetrack shape, a shape in which one portion of a simple closed curved line such as a cylindroid shape or an elongated round shape has a recess portion (concave shape), and the like.

The cell wall thickness of the honeycomb structured body is preferably 0.15 mm or more. A honeycomb structured body having a cell wall thickness of less than 0.15 mm may have low strength.
The preferable upper limit of the cell wall thickness is 0.4 mm. An excessively thick cell wall leads to a small aperture ratio and/or a small filtering area, and thereby may cause a large pressure loss.

The cell density of the honeycomb structured body perpendicular to the longitudinal direction preferably has a lower limit of 150 pcs/in² (23.3 pcs/ cm²), an upper limit of 600 pcs/in² (93.0 pcs/cm²), and more preferably has a lower limit of 200 pcs/in² (31 pcs/ cm²) and an upper limit of 500.0 pcs/in² (77.5 pcs/cm²).

Here, the shape of the above-mentioned cells in a plan view is not particularly limited to a square shape, and any desired shape such as a triangular shape, a hexagonal shape, an octagonal shape, a dodecagonal shape, a round shape, an elliptical shape and a star shape may be used.

In a method for manufacturing the honeycomb structured body of the embodiments of the present invention, the aluminum titanate powdery material may not necessarily include a fine powdery material of aluminum titanate and a coarse powdery material of aluminum titanate, and only an aluminum titanate powdery material having one kind of average particle diameter may be used.

In a method for manufacturing the honeycomb structured body of the embodiments of the present invention, if the aluminum titanate powdery material includes a fine powdery material of aluminum titanate and a coarse powdery material of aluminum titanate, the blending ratio of the fine powdery material of aluminum titanate and the coarse powdery material of aluminum titanate is preferably (9:1) to (6:4).
The use of them in a blending ratio within the above-mentioned ranges results in prevention of size reduction of a honeycomb molded body caused by shrinkage during the firing step, and makes it possible to control the average pore diameter, the pore distribution and the porosity.

In a method for manufacturing the honeycomb structured body of the embodiments of the present invention, the firing time required to fire a honeycomb molded body is preferably 0.5 to 24 hours.
Firing for less than 0.5 hour may not be enough to fire a honeycomb molded body. Firing for more than 24 hours, however, may cause a high degree of shrinkage through the firing step.

An organic binder used for preparation of the wet mixture is not particularly limited, and examples thereof include, in addition to methylcellulose used above, carboxy methylcellulose, hydroxy ethylcellulose, polyethylene glycol, and the like. Methylcellulose is desirable among these.
The desirable blending amount of the organic binder is 1 to 10 parts by weight with respect to 100 parts by weight of the aluminum titanate powdery material.

A plasticizer and a lubricant used for preparation of the wet mixture are not particularly limited. Examples of the plasticizer include glycerin used above, and the like. Examples of the lubricant include polyoxyalkylene compounds such as polyoxyethylene alkyl ethers and polyoxypropylene alkyl ethers, and the like.
Here, the plasticizer and the lubricant may not be contained in the wet mixture in some cases.

In addition, a dispersant solution used for preparation of the wet mixture is not limited to water used above, and examples thereof include alcohol such as methanol, organic solvents such as benzene and toluene, and the like.
Furthermore, a molding auxiliary may be contained in the wet mixture.
The molding auxiliary is not particularly limited, and examples thereof include ethylene glycol, dextrin, fatty acids, fatty acid soaps, polyalcohols, and the like.

In addition, a pore-forming agent such as spherical acrylic particles or graphite may be contained in the wet mixture, if necessary.

The plug material paste used to seal cells is not particularly limited, a paste to form, through the firing step, a plug having a porosity of 40 to 60% is preferably used. For example, the same paste as the wet mixture may be used.

The honeycomb structured body may have a catalyst supported thereon, if necessary. The catalyst supported on the honeycomb structured body is not particularly limited, and example thereof include noble metals, alkaline metals, alkaline-earth metals, metal oxides, and the like. Any of these may be used alone, or two or more of these may be used in combination.

Examples of the noble metals include platinum, palladium, rhodium, and the like. Examples of the alkaline metals include potassium, sodium, and the like. Examples of the alkaline-earth metals include barium and the like. Examples of the metal oxides include CeO₂, ZrO₂, FeO₂, Fe₂O₃, CuO, CuO₂, Mn₂O₃, MnO, complex oxides indicated by a composition formula AₙB₁₋ₙCO₃ (in the formula, A is La, Nd, Sm, Eu, Gd, Ce, Pr, Pm or Y; B is an alkaline metal or alkaline-earth metal; C is Mn, Co, Fe or Ni; and 0≤n≤1), and the like.
Any of these catalysts may be used alone, or two or more kinds of these may be used in combination; however, the catalyst desirably contains at least CeO₂. The catalyst is supported on a honeycomb structured body used as a honeycomb filter to lower the burning temperature of PM in the regenerating process.

Before the catalyst is applied, an alumina film having a high specific surface area may be formed on the surface of a honeycomb structured body, and then the catalyst may be applied to the surface of this alumina film.

An apparatus used to form an elongated honeycomb molded body in the extrusion-molding step is not particularly limited, and examples thereof include, in addition to the plunger-type extrusion-molding machine used above, a single-screw-type extrusion-molding machine, a multi-screw-type extrusion-molding machine, and the like.

Driers used to dry a honeycomb molded body after the cutting step or the sealing step are not particularly limited, and examples thereof include, in addition to the microwave heat drying apparatus and the hot-air drying apparatus used above, an infrared ray drying apparatus, and the like. Two or more of these may be used in combination.

### BRIEF DESCRIPTION OF THE DRAWINGS

Fig. 1 (a) is a perspective view schematically illustrating the honeycomb structured body of the present invention, and Fig. 1 (b) is an A-A line cross-sectional view of Fig. 1 (a);
Fig. 2 is an explanatory view of the regenerating process interval measuring apparatus;
Fig. 3 is a graph showing the relationship between the porosity and the regenerating process interval coefficient of Example 2, 5 and 8, and Comparative Examples 1 and 2, which had the same porosity of 63.3%.
Fig. 4 is a graph showing the relationship between the aperture ratio and the regenerating process interval coefficient of Examples 1 to 9 and Comparative Examples 3 to 6.

### EXPLANATION OF SYMBOLS

- 10: Honeycomb Structured Body
- 11: Cell

## Claims

1. A pillar-shaped honeycomb structured body comprising aluminum titanate containing ratios of 40 to 60% by mass of Al₂O₃, 30 to 50% by mass of TiO₂, and 1 to 15% by mass of (MgO + SiO₂), said honeycomb structured body comprising a large number of cells provided in parallel with one another in a longitudinal direction, said cells each being sealed at either one end,
wherein
said honeycomb structured body has a porosity of 40% to 60% and an aperture ratio of 55% to 75%.

2. The honeycomb structured body according to claim 1, wherein said honeycomb structured body is manufactured by molding a wet mixture comprising an aluminum titanate powdery material containing ratios of 40 to 60% by mass of Al₂O₃, 30 to 50% by mass of TiO₂, and 1 to 15% by mass of (MgO + SiO₂) to form a pillar-shaped honeycomb molded body having a large number of cells provided in parallel with one another in a longitudinal direction; and
firing said honeycomb molded body at a temperature of 1200°C to 1700°C, and
has a porosity of 40% to 60% and an aperture ratio of 55% to 75%.
